**Europäisches Patentamt**

**European Patent Office**

**Office européen des brevets**

(11) Veröffentlichungsnummer: **0 014 725**
**B1**

(12) **EUROPÄISCHE PATENTSCHRIFT**

(45) Veröffentlichungstag der Patentschrift:
**12.08.81**

(51) Int. Cl.³: **B 25 C 1/00**

(21) Anmeldenummer: **79100515.0**

(22) Anmeldetag: **21.02.79**

(54) **Nagelstreifen und zugehöriges Eintreibwerkzeug sowie Verfahren zum Herstellen des Nagelstreifens.**

(43) Veröffentlichungstag der Anmeldung:
**03.09.80 Patentblatt 80/18**

(45) Bekanntmachung des Hinweises auf die Patenterteilung:
**12.08.81 Patentblatt 81/32**

(84) Benannte Vertragsstaaten:
**BE CH FR GB IT NL SE**

(56) Entgegenhaltungen:
**DE-A-2 444 457**
**DE-A-1 478 888**
**DE-B-1 603 946**
**DE-A-1 703 377**
**GB-A-1 142 734**

(73) Patentinhaber: **SIGNODE CORPORATION, 3600 West Lake Avenue, Glenview Illinois 60025 (US)**

(72) Erfinder: **Klaus, Arthur, Wielandstrasse 21, D-6000 Frankfurt a.M. (DE)**
Erfinder: **Wilhelm, Hans, Hanauer Strasse 93, D-6368 Bad Vilbel (DE)**

(74) Vertreter: **Zimmermann, Heinz, Dipl.-Ing. et al, Patentanwälte Leinweber & Zimmermann Rosenthal 7/II Aufg., D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Nagelstreifen und zugehöriges Eintreibwerkzeug sowie Verfahren zum Herstellen des Nagelstreifens

Die Erfindung bezieht sich auf zu einem Nagelstreifen vereinigte Nägel und Werkzeug zum Eintreiben der Nägel mit folgenden Merkmalen:

a. die Nägel sind mit parallelen Schäften und ausgerichteten Köpfen nebeneinanderliegend angeordnet,

b. die Nägel sind durch mindestens einen von den Nagelschäften durchsetzten biegsamen Verbindungsstreifen aus Kunststoff miteinander verbunden,

b.1 der Verbindungsstreifen hat einen viereckigen Querschnitt, dessen dem Ausstoßkanal des Eintreibwerkzeugs zugekehrte Vorderseite die Nagelschäfte geringfügig überragt und dessen Rückseite mit dem Außenrand der Nagelköpfe näherungsweise bündig ist,

c. das Eintreibwerkzeug ist im Bereich des Ausstoßkanals mit einer den Verbindungsstreifen führenden und an dessen Unterseite abstützenden Rille versehen,

c.1 die im Eintreibwerkzeug ausgebildete Rille hat im Querschnitt eine zu der Unterseite und zu der Rückseite des Verbindungsstreifens parallele Unterseite bzw. Rückseite.

Bei einem bekannten Nagelstreifen und dem zugehörigen Eintreibwerkzeug dieser Art (DE-AS 16 03 946) liegt der Verbindungsstreifen mit seiner Rückseite unmittelbar an der Rückseite der in dem Eintreibwerkzeug ausgebildeten Rille an. Der Ausstoßkanal ist in seinem den Kopf des einzutreibenden Nagels aufnehmenden oberen Bereich mit einer Erweiterung in Form einer Aussparung versehen, deren auf der Seite der Rille befindliche Seitenwand als schräge Fläche ausgebildet ist, die nach abwärts allmählich in die entsprechende Seitenwand des Ausstoßkanals übergeht. Wenn der vorderste Nagel des Nagelstreifens in dem Führungskanal angeordnet ist, dann greift sein Kopf in die Aussparung des Führungskanals ein. Beim Ausüben eines Schlages treibt der Stößel den Nagel im Führungskanal nach unten in das vor der Mündung des Führungskanals bereitliegende Werkstück ein. Bei dieser Axialbewegung des Nagels innerhalb des Führungskanals wird der Nagelkopf durch die schräge Fläche der Aussparung zur Mitte des Führungskanals hin gedrückt. Dadurch wird der Nagel von dem Verbindungsstreifen abgezogen. Der Stößel kommt hierbei nur mit den in den Führungskanal hineinragenden Bereichen des Verbindungsstreifens in Berührung, so daß er diese Bereiche abbricht, die sodann durch den Führungskanal ausgestoßen werden.

Bei einem weiteren bekannten Eintreibgerät (DE-AS 19 23 712) ist die Möglichkeit geschaffen, es auch für das Eintreiben von Schrauben zu verwenden. Zu diesem Zweck ist neben einer dem Stößel des vorerwähnten bekannten Geräts entsprechenden Schraubenzieherklinge zusätzlich noch ein als Ausstoßglied für die bereitstehende Schraube dienender Schieber angeordnet. Auch hier ist in dem den Kopf der Schraube aufnehmenden Bereich des Führungskanals eine schräge Führungsfläche angeordnet, die bewirkt, daß die Schraube aus der Bereitschaftsstellung seitwärts in den Führungskanal gedrückt wird, wenn sie von dem Schieber unter Trennung von dem Verbindungsstreifen nach unten geschoben wird.

Bei diesen bekannten Eintreibwerkzeugen wird somit auf die Köpfe der Befestigungsmittel eine seitwärts gerichtete Kraft ausgeübt, um sie seitlich aus dem Verbindungsstreifen herauszubrechen, der selbst ortsfest bleibt. Wegen des bei diesem Arbeitsprinzip für die seitwärts gerichtete Bewegung erforderlichen Spielraums hat sich eine einwandfreie Führung der Befestigungsmittel als sehr schwierig herausgestellt, zumal sich Teile des Verbindungsstreifens ablösen und durch den Führungskanal austreten.

Auch bei diesen bekannten Nagelstreifen und Eintreibgeräten wird dem seit langem bestehenden Bedarf an einem Nagelstreifen und einem zugehörigen Eintreibwerkzeug nicht Rechnung getragen, bei dem bereits beim Beginn des Eintreibvorganges eines Nagels letzterer vom Verbindungsstreifen vollständig abgetrennt wird und gleichzeitig gewährleistet ist, daß er völlig restefrei in das Werkstück eingetrieben wird und daß keine Reststücke des Verbindungsstreifens in den Ausstoßkanal des Eintreibwerkzeuges mitgerissen werden.

Nun sind in der DE-OS 17 03 377 bereits ein Nagelstreifen und ein zugehöriges Eintreibwerkzeug beschrieben, die diesem Bedürfnis in gewissem Umfang Rechnung tragen. Dabei ist vorgesehen, daß der Verbindungsstreifen im Querschnitt etwa [-förmig ausgebildet ist, so daß ein zu den Nägeln paralleler Mittelschenkel und zwei Außenschenkel entstehen. Dabei bestehen die Außenschenkel aus im Abstand voneinander und paarweise einander gegenüber angeordneten, mit dem Schenkel gelenkig verbundenen Lappen. Jeder dieser Lappen hat eine Öffnung zur Aufnahme eines Nagelschaftes, an die sich ein nach außen offener Schlitz anschließt. Demzufolge wird jeder Nagel in zwei gegenüberliegenden Lappen derart gehalten, daß er beim Eintreiben zunächst vom oberen und dann vom unteren Lappen freigegeben wird, wobei die beiden Lappen jeweils nach unten umklappen.

Bei diesem bekannten Nagelstreifen bereitet die Herstellung des Verbindungsstreifens jedoch insofern gewisse Schwierigkeiten, als dieser widersprüchlichen Anforderungen genügen muß. Einerseits soll der Verbindungsstreifen die Nägel während ihres Transportes in den Ausstoßkanal sicher in der gewünschten Stellung halten. Wenn sich die Nägel gegenüber dem Haltestreifen in vertikaler Richtung bewegen können, dann können sie den Boden des Gehäuses oder Magazins berühren und dadurch den Vorschub beeinträchtigen. Darüber hinaus müssen die Nägel während des Eintreibens durch die beiden Lappen des Verbindungsstreifens gehalten werden, um eine Schiefstellung in dem Ausstoßkanal zu verhindern. Andererseits ist es aber erforderlich, daß die Lappen gelenkig mit dem mittleren Schenkel des Streifens verbunden sind, so daß sie beim Eintreiben des Nagels nach unten abgebogen werden können, um jede Schiefstellung des Nagels zu vermeiden, und diesen freizugeben. Darüber hinaus muß aber gewährleistet sein, daß die Lappen nicht abbrechen, was eine Verstopfung des Ausstoßkanals zur Folge hätte.

Der Erfindung liegt die Aufgabe zugrunde, den Nagelstreifen und das zugehörige Eintreibwerkzeug der eingangs genannten Art dahingehend zu verbessern, daß die einzelnen Nägel von dem Verbindungsstreifen einerseits hinreichend fest abgestützt werden und andererseits beim Eintreibvorgang von dem Verbindungsstreifen vollständig abgetrennt werden.

Erfindungsgemäß wird diese Aufgabe dadurch gelöst, daß

a.1    die Köpfe der Nägel als keilartige Kegelstümpfe ausgebildet sind und

c.1.1  die Rückseite der im Eintreibwerkzeug ausgebildeten Rille von der Rückseite des Verbindungsstreifens einen Abstand aufweist, der mindestens der Dicke eines Nagelschaftes entspricht.

Wenn ein solcher Nagelstreifen in dem zugehörigen Eintreibwerkzeug verarbeitet wird, dann wird der Verbindungsstreifen in der Rille des Mündungsteils des Werkzeugs so geführt, daß er beim Eintreibvorgang in Eintreibrichtung abgestützt wird, jedoch rechtwinklig zur Eintreibrichtung ausweichen kann. Wenn mit dem Eintreibwerkzeug ein Nagel betrieben wird, dann wird der im Querschnitt breitere Teil des Verbindungsstreifens unter der Einwirkung des kegelförmig ausgebildeten Nagelkopfes rechtwinklig zur Eintreibrichtung von dem Ausstoßkanal weggeschoben. Dabei platzt die schwächere, den Nagelschaft umschließende Seite des Verbindungsstreifens auf und gibt den Nagel mit Nagelkopf frei. Infolgedessen gelangen keinerlei Reste des Verbindungsstreifens in den Ausstoßkanal des Eintreibwerkzeugs. Der aus Kunststoff bestehende Verbindungsstreifen tritt vielmehr, ohne in einzelne Bruchstücke zu zerfallen, nach Freigabe aller Nägel an der Vorderseite des Mündungsteils des Werkzeugs aus. Da der Nagel während des gesamten Eintreibvorgangs in dem Ausstoßkanal ausschließlich axial verschoben wird, braucht der Ausstoßkanal lediglich einen geringfügig größeren Durchmesser als der Nagelkopf aufzuweisen, so daß eine gute Führung des Nagels gewährleistet ist.

Der Verbindungsstreifen hat vorzugsweise einen rechteckigen Querschnitt, dessen Ober- und Unterseite zu der Achse der Nägel rechtwinklig ist. Dadurch ergibt sich eine gute Abstützung des Verbindungsstreifens, ohne daß seine Ausweichbewegung behindert wird.

Als Material für den Verbindungsstreifen hat sich Polyamid besonders bewährt.

Im Hinblick auf eine Erleichterung der Freigabe des Nagels durch den Verbindungsstreifen ist es zweckmäßig, wenn der Verbindungsstreifen an der Vorderseite jeweils im Bereich des kleinsten Querschnitts mit Sollbruchstellen versehen ist.

Zur Steigerung der Stabilität des Nagelstreifens ist bei einer besonders vorteilhaften Ausführungsform der Erfindung vorgesehen, daß die Nägel durch zwei zueinander parallele Verbindungsstreifen vereinigt sind und daß im Werkzeug zwei entsprechende Rillen ausgebildet sind.

Der Nagelstreifen kann erfindungsgemäß in der Weise hergestellt werden, daß die Nägel in die Löcher eines vorgefertigten Verbindungsstreifens eingeschoben werden.

Anstelle dieses Kaltverfahrens ist aber auch ein Heißverfahren einsetzbar, bei dem die Nägel mit einem den Verbindungsstreifen bildenden geschmolzenen Kunststoff umgossen werden.

Im folgenden wird die Erfindung anhand der Zeichnung näher erläutert, auf die bezüglich aller nicht im Text beschriebenen Einzelheiten ausdrücklich verwiesen wird. Es zeigt

Figur 1 eine Seitenansicht eines erfindungsgemäßen Nagelstreifens,

Figur 2 eine Vorderansicht des Nagelstreifens nach Figur 1,

Figur 3 einen Schnitt durch den Nagelstreifen nach der Linie III-III in Figur 1,

Figur 4 einen rechtwinklig zu dem Nagelstreifen gelegten Schnitt durch den Mündungsteil eines erfindungsgemäßen Eintreibwerkzeugs unmittelbar vor Beginn des Eintreibvorgangs,

Figur 5 eine Darstellung ähnlich wie Figur 4, jedoch zu einem späteren Zeitpunkt während des Eintreibvorgangs,

Figur 6 eine Darstellung ähnlich wie Figur 4, jedoch zu einem noch späteren Zeitpunkt während des Eintreibvorgangs, und

Figur 7 einen parallel zu dem Nagelstreifen gelegten Schnitt durch den Mündungsteil des Eintreibwerkzeugs nach Figur 4.

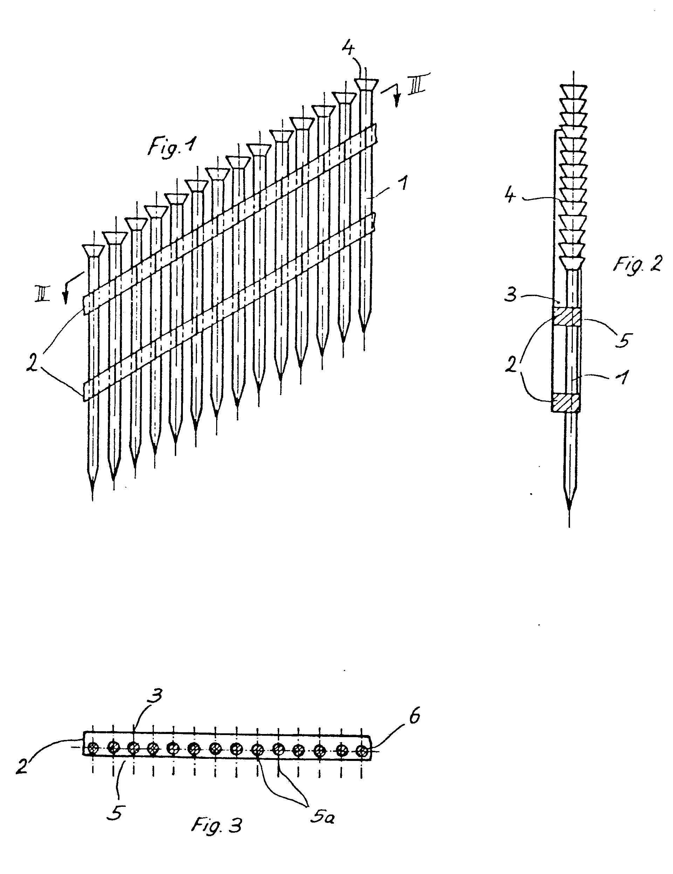

Wie insbesondere aus den Figuren 1 bis 3 hervorgeht, besteht die Nagelstreifen aus einer Vielzahl von Nägeln 1, die mit parallelen Schäften 6 und ausgerichteten Köpfen 4 nebeneinanderliegend angeordnet und durch zwei zueinander parallele Verbindungsstreifen 2 aus Polyamid miteinander verbunden sind. Die Verbindungsstreifen 2 haben einen rechteckigen Querschnitt, und sie werden von den Nagelschäften 6 asymmetrisch durchsetzt. In der Vorderansicht nach Figur 2 nehmen die Verbindungsstreifen 2 auf ihrer linken Seite 3 die Breite des Nagelkopfes 4 ein, während sie auf ihrer rechten Seite 5 die Nagelschäfte 6 gerade noch umschließen. Die asymmetrische Anordnung der Nagelschäfte 6 in den Verbindungsstreifen 2, deren Zweck nachfolgend noch näher erläutert wird, ist auch aus Figur 3 ersichtlich.

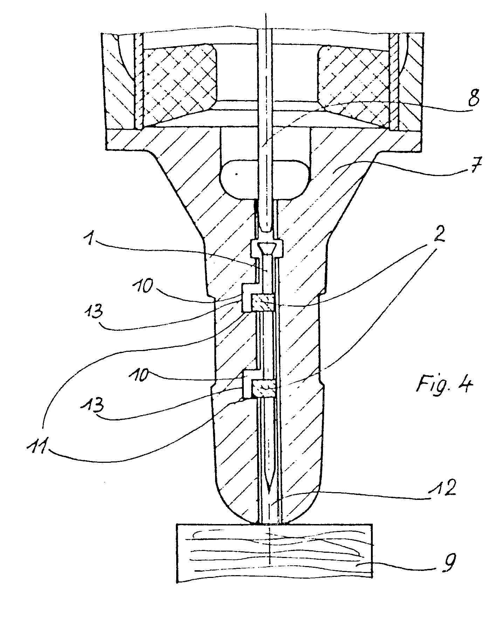

Figur 4 zeigt den unteren Teil eines Eintreibwerkzeugs im Schnitt mit einem Mündungsteil 7, in dem sich ein Eintreibstößel 8 in der oberen Totpunktstellung befindet, bereit den darunter in Bereitstellung angeordneten Nagel 1 in ein Werkstück 9 einzutreiben. Aus dieser Darstellung ist auch ersichtlich, daß die Verbindungsstreifen 2 in zwei Rillen 10 des Mündungsteils 7 so geführt werden, daß sie von der Unterseite 11 der zugeordneten Rille während des Eintreibvorgangs festgehalten bzw. abgestützt werden und nicht in den Ausstoßkanal 12 des Werkzeugs gelangen können. Die Unterseite 11 der Rillen 10 ist zu der Unterseite der Verbindungsstreifen 2 parallel, und die Rückseite 13 der Rillen 10 weist von der Rückseite 3 des zugeordneten Verbindungsstreifens 2 einen Abstand auf, der mindestens der Dicke eines Nagelschaftes 6 entspricht.

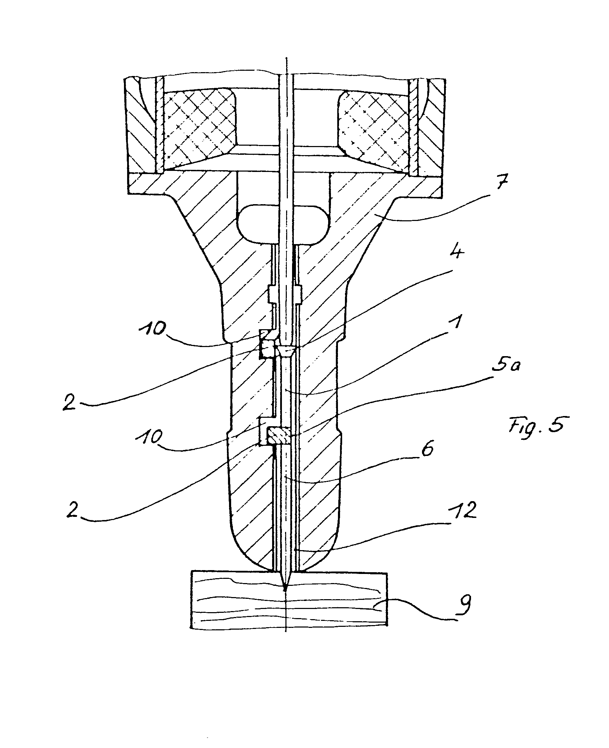

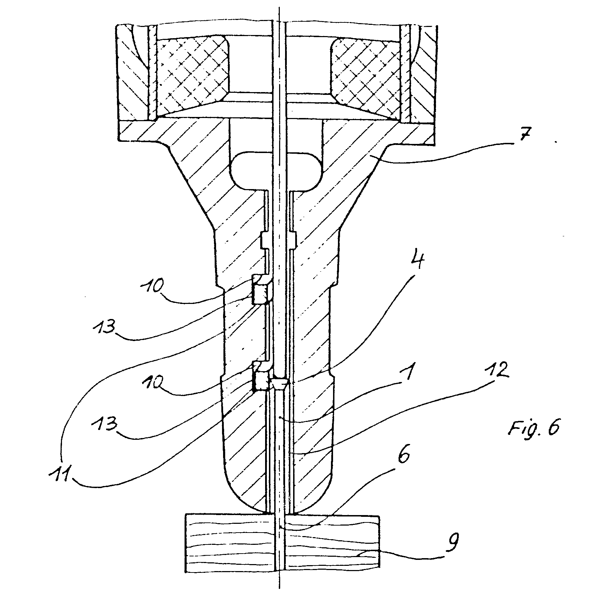

Wie in den Figuren 5 und 6 gezeigt, werden die Verbindungsstreifen 2 im Verlauf des Eintreibvorgangs von dem an der Unterseite kegelförmigen Kopf 4 des Nagels 1 rechtwinklig zur Eintreibrichtung in den Rillen 10 des Mündungsteils 7 von dem Ausstoßkanal 12 weg zur Seite gedrückt. Das hat zur Folge, daß die dem Ausstoßkanal 12 zugekehrte und den Nagelschaft 6 nur geringfügig überdeckende Vorderseite 5 des Verbindungsstreifens 2 aufplatzt und den einzutreibenden Nagel 1 freigibt, ohne daß Reste des Verbindungsstreifens in den Ausstoßkanal mitgerissen werden. Dieses Aufplatzen des Verbindungsstreifens 2 unter der Keilwirkung des Nagelkopfes 4 kann noch erleichtert werden, indem die Vorderseite 5 des Verbindungsstreifens jeweils im Bereich des kleinsten Querschnitts mit Sollbruchstellen versehen wird, die in Figur 3 mit dem Bezugszeichen 5a veranschaulicht sind.

Zu dem Zeitpunkt, zu dem der untere Verbindungsstreifen 2 aufplatzt, ist der Nagelschaft 6 bereits so weit in das Werkzeug 9 eingedrungen, daß eine ausreichende Führung dasselbe gegen ein Verkanten in dem Ausstoßkanal 6 gewährleistet ist.

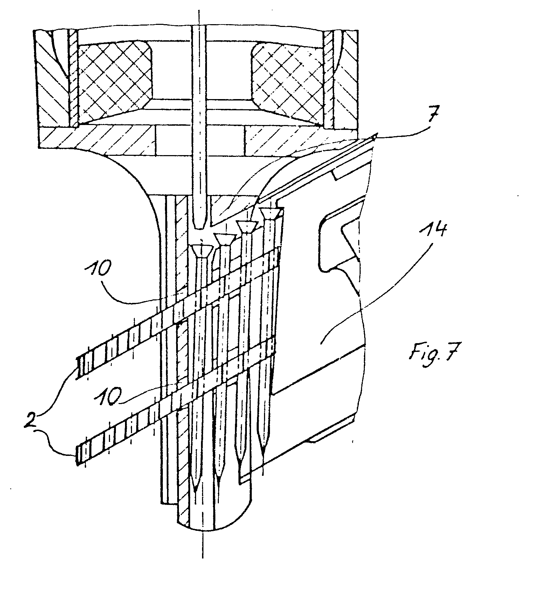

In Figur 7 ist in einem zu dem Nagelstreifen parallelen Schnitt durch den Mündungsteil des Eintreibwerkzeugs gezeigt, wie der Nagelstreifen unter der Andruckkraft eines federbelasteten Schiebers 14 aus einem Nagelmagazin in das Mündungsteil 7 hineingeschoben und dabei durch die in diesem angebrachten Rillen 10 geführt wird und wie die Verbindungsstreifen 2 im Verlauf des Aufbruchs des Nagelstreifens aus der Vorderseite des Mündungsteils 7 austreten.

Bei den in der Zeichnung dargestellten und vorstehend beschriebenen Ausführungsbeispielen der Erfindung sind die einzelnen Nägel des Nagelstreifens gestuft angeordnet. Es ist aber ohne weiteres einzusehen, daß die Erfindung ebenso gut bei einem Nagelstreifen verwirklicht werden kann, bei dem die Köpfe auf einer einheitlichen Höhe angeordnet sind, so daß der oder die Verbindungsstreifen zur Achse der Nagelschäfte rechtwinklig verlaufen und die in dem zugeordneten Eintreibwerkzeug befindliche Rille bzw. die Rillen in entsprechender Weise rechtwinklig zu dem Ausstoßkanal angeordnet sind.

**Patentansprüche**

1. Zu einem Nagelstreifen vereinigte Nägel und Werkzeug zum Eintreiben der Nägel (1) mit folgenden Merkmalen:

a. die Nägel (1) sind mit parallelen Schäften und ausgerichteten Köpfen (4) nebeneinanderliegend angeordnet,

b. die Nägel sind durch mindestens einen von den Nagelschäften durchsetzten biegsamen Verbindungsstreifen (2) aus Kunststoff miteinander verbunden,

b.1 der Verbindungsstreifen (2) hat einen viereckigen Querschnitt, dessen dem Ausstoßkanal des Eintreibwerkzeugs zugekehrte Vorderseite die Nagelschäfte geringfügig überragt und dessen Rückseite mit dem Außenrand der Nagelköpfe (4) näherungsweise bündig ist,

c. das Eintreibwerkzeug ist im Bereich des Ausstoßkanals mit einer den Verbindungsstreifen führenden und an dessen Unterseite abstützenden Rille (10) versehen,

c.1 die im Eintreibwerkzeug ausgebildete Rille (10) hat im Querschnitt eine zu der Unterseite und zu der Rückseite des Verbindungsstreifens parallele Unterseite bzw. Rückseite,

gekennzeichnet durch folgende Merkmale:

a.1 die Köpfe (4) der Nägel (1) sind als keilartige Kegelstümpfe ausgebildet und

c.1.1 die Rückseite (13) der im Eintreibwerkzeug (7) ausgebildeten Rille (10) weist von der Rückseite (3) des Verbindungsstreifens 2 einen Abstand auf, der mindestens der Dicke eines Nagelschaftes (6) entspricht.

2. Nagelstreifen und Eintreibwerkzeug nach Anspruch 1, dadurch gekennzeichnet, daß der Verbindungsstreifen (2) einen rechteckigen Querschnitt hat, dessen Ober- und Unterseite zu der Achse der Nägel (1) rechtwinklig ist.

3. Nagelstreifen und Eintreibwerkzeug nach Anspruch 1, dadurch gekennzeichnet, daß der Verbindungsstreifen (2) aus Polyamid besteht.

4. Nagelstreifen und Eintreibwerkzeug nach Anspruch 1, dadurch gekennzeichnet, daß der Verbindungsstreifen (2) an der Vorderseite (5) jeweils im Bereich des kleinsten Querschnitts mit Sollbruchstellen (5a) versehen ist.

5. Nagelstreifen und Eintreibwerkzeug nach Anspruch 1, dadurch gekennzeichnet, daß die Nägel (1) durch zwei zueinander parallele Verbindungsstreifen (2) vereinigt sind und daß im Werkzeug (7) zwei entsprechende Rillen (10) ausgebildet sind.

6. Verfahren zum Herstellen eines Nagelstreifens nach Anspruch 1, dadurch gekennzeichnet, daß die Nägel in die Löcher eines vorgefertigten Verbindungsstreifens eingeschoben werden.

7. Verfahren zum Herstellen eines Nagelstreifens nach Anspruch 1, dadurch gekennzeichnet, daß die Nägel mit einem den Verbindungsstreifen bildenden geschmolzenen Kunststoff umgossen werden.

## Claims

1. Nails combined to form a strip of nails and a tool for driving in said nails (1), said tool comprising the following features:

a. said nails (1) are disposed in side-by-side relation with their shanks extending in parallel and their heads (4) aligned,

b. said nails are connected to each other by at least one for the flexible plastic connecting tapes (2) pierced by said nail shanks,

b1 said connecting tape (2) has a rectangular cross-section the front side of which facing the discharge passage of the driving tool and slightly projecting beyond said nail shanks, and tho rear side of which being substantially flush with the outer edge of said nail heads (4),

c. said driving tool has a groove (10) adjacent said discharge passage, said groove guiding said connecting tape and supporting the underside thereof,

c1 the cross-section of said groove (10) formed in said driving tool has an underside and rearside, respectively, which extend parallel to the underside and the rearside of said connecting tape,

characterized by the following features:

a1 said heads (4) of said nails (1) have a wedge-like truncated cone configuration, and

c1.1. the rearside (13) of said groove (10) formed in said driving tool (7) is spaced apart from the rearside (3) of said connecting tape (2) by a distance which corresponds at least to the thickness of one nail shank (6).

2. A strip of nails and a driving tool according to claim 1, characterized in that said connecting tape (2) has a rectangular cross-section the upperside and the underside of which extending at right angles relative to the axis of said nails (1).

3. A strip of nails and a driving tool according to claim 1, characterized in that said connecting tape (2) consists of polyamid.

4. A strip of nails and a driving tool according to claim 1, characterized in that said connecting tape (2) has at the front side (5) thereof preset breaking points (5a) adjacent to where the cross-sectional area is smallest.

5. A strip of nails and a driving tool according to claim 1, characterized in that said nails (1) are connected together by a pair of parallel connecting tapes (2), and in that a pair of corresponding grooves (10) is formed in the tool (7).

6. A method of manufacturing a strip of nails according to claim 1, characterized in that said nails are inserted into the holes of a prefabricated connecting tape.

7. A method of manufactering a strip of nails according to claim 1, characterized in that fused synthetic material is cast around said nails so as to form said connecting tape.

## Revendications

1. Clous réunis en une bande et outil servant à enfoncer les clous (1) présentant les caractéristiques suivantes:

a. les clous (1) sont disposés les uns à côté des autres en ayant leurs tiges parallèles et leurs têtes (4) alignées,

b. les clous sont réunis les uns aux autres à l'aide d'au moins une bande d'attache (2) en matière plastique souple, traversée par les tiges desdits clous,

b1 la bande d'attache (2) présente une section carrée dont la face avant tournée vers le canal d'éjection de l'outil à enfoncer, dépasse légèrement des tiges des clous et dont la face arrière se termine approximativement au ras du bord extérieur des Têtes (4) des clous;

c. l'outil à enfoncer les clous comprend au niveau de son canal d'éjection, une gorge (10) qui sert de guidage à la bande d'attache et sert d'appui à la face inférieure de cette dernière;

c1 la gorge (10) formée dans l'outil précité présente en section transversale un côté inférieur et un côté arrière parallèles à la face inférieure et à la face arrière de ladite bande d'attache,

caractérisé en ce que:

a1 le têtes (4) des clous (1) sont de configuration tronconique,

c1.1. le côté arrière (13) formant fond de la rainure (10) réalisée dans l'outil (7) à enfoncer les clous présente vis-à-vis de la face arrière (3) de la bande d'attache (2), un écartement qui est au moins égal à l'épaisseur d'une tige (6) de clou.

2. Bande formée de clous réunis et outil servant à les enfoncer selon la revendication 1, caractérisé en ce que ladite bande d'attache (2) présente une section transversale rectangulaire dont les côtés supérieur et inférieur sont perpendiculaires à l'axe des clous (1).

3. Bande formée de clous réunis et outil servant à les enfoncer selon la revendication 1, caractérisé en ce que la bande d'attache (2) est formée de polyamide.

4. Bande formée de clous réunis et outil servant à les enfoncer selon la revendication 1, caractérisé en ce que la bande d'attache (2) présente sur sa face avant (5), respectivement au niveau de la plus petite section, des amorces de ruptures (5a).

5. Bande formée de clous réunis et outil servant à les enfoncer selon la revendication 1, caractérisé en ce que les clous (1) sont réunis à l'aide de deux bandes d'attache (2) parallèles l'une à l'autre et en ce que dans l'outil (7), sont formées deux gorges (10) correspondantes.

6. Procédé de fabrication d'une bande formée de clous réunis selon la revendication 1, caractérisé en ce que les clous sont introduits dans les trous de bande d'attache préfabriquée.

7. Procédé de fabrication d'une bande formée de clous réunis selon la revendication 1, caractérisé en ce que les clous sont enveloppés par coulage d'une matière plastique fondue formant la bande d'attache précitée.

Fig. 1

Fig. 2

Fig. 3

Fig. 4

Fig. 5

Fig. 6

Fig. 7